(19) **Europäisches Patentamt / European Patent Office / Office européen des brevets**

(11) **EP 1 803 622 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(51) Int Cl.:
*B60W 30/12* (2006.01)    *B60W 50/02* (2006.01)
*B62D 15/02* (2006.01)    *B60W 40/06* (2006.01)

(21) Anmeldenummer: **06127330.6**

(22) Anmeldetag: **29.12.2006**

(54) **Verfahren für die Steuerung eines Fahrerassistenzsystems**

Control method for a driver assistance system

Procédé de commande d'un système d'assistance à la conduite

(84) Benannte Vertragsstaaten:
**DE FR GB**

(30) Priorität: **03.01.2006 DE 102006000640**

(43) Veröffentlichungstag der Anmeldung:
**04.07.2007 Patentblatt 2007/27**

(73) Patentinhaber: **ROBERT BOSCH GMBH**
**70442 Stuttgart (DE)**

(72) Erfinder:
• **Weilkes, Michael**
 **74343, Sachsenheim (DE)**
• **Trautmann, Toralf**
 **70839, Gerlingen (DE)**

(56) Entgegenhaltungen:
| | |
|---|---|
| EP-A- 1 074 430 | EP-A- 1 557 784 |
| WO-A-2005/039957 | DE-A- 10 006 403 |
| DE-A- 10 254 424 | US-A1- 2004 183 663 |

## Beschreibung

### Stand der Technik

Die Erfindung betrifft ein Verfahren für die Steuerung eines Fahrerassistenzsystem nach dem Oberbegriff des Anspruchs 1. Fahrerassistenzsysteme werden verstärkt geplant und in geringem Umfang bereits in Serienfahrzeugen eingesetzt. Sie dienen der Unterstützung des Fahrers bei der Führung des Fahrzeugs, insbesondere bei schwierigen Verkehrsverhältnissen und schlechten Sichtbedingungen. Besonders viel versprechend scheint der Einsatz eines Fahrerassistenzsystems für die Querführung des Fahrzeugs zu sein, um beispielsweise eine automatische Spurführung des Fahrzeugs zu ermöglichen. Bevorzugt wird bei einem solchen Fahrassistenzsystem mindestens ein Umfeldsensor eingesetzt, um Daten aus dem Umfeld des Fahrzeugs zu erfassen und diese Daten für die Steuerung des Fahrzeugs und dessen Systeme zu benutzen. Vorteilhaft wird insbesondere eine Videosensorik mit Objekterkennung als Umfeldsensor eingesetzt, um eine modellbasierte Beschreibung der Fahrspur und ihrer Begrenzungen zu erhalten. Im praktischen Einsatz eines solchen Fahrerassistenzsystems kommt es bei besonders schwierigen Verkehrsbedingungen vor, dass bestimmte Funktionen des Fahrerassistenzsystems aus Sicherheitsgründen deaktiviert werden und dem Fahrer dies signalisiert wird. Dies wird zumindest als störende Komfortverminderung empfunden. Eine solche schwierige Verkehrssituation ist beispielsweise gegeben, wenn Lücken in der Markierung markierter Fahrspuren auftreten oder Markierungen der Fahrspur durch Hindernisse, wie beispielsweise andere Verkehrsteilnehmer, verdeckt werden.

Die WO 2005/039957 A1 beschreibt ein Fahrerassistenzsystem, bei welchem eine Videokamera Daten über den Verlauf von Fahrspuren erfasst. Im Falle eines Ausfalls dieser Daten wird vorgeschlagen, aus anderen, einen Fahrspurverlauf kennzeichnenden Größen wie beispielsweise dem Kurs vorausfahrender Fahrzeuge, dem Verlauf von Leitplanken, etc. Schätzwerte für den Fahrspurverlauf zu generieren.

Diese Schrift offenbart ein Verfahren nach dem Oberbegriff des Anspruchs 1.

Die US 2004/0183663 A1 zeigt ein Fahrerassistenzsystem, bei welchem eine Fahrspurerkennung vorgesehen ist. Bei Verlassen der Fahrspur wird der Fahrer gewarnt.

### Vorteile der Erfindung

Das erfindungsgemäße Verfahren mit den Merkmalen des Anspruchs 1 ermöglicht dagegen einen weitgehend ungestörten Betrieb des Fahrerassistenzsystems auch dann, wenn infolge eines Störfalls von dem Umfeldsensor keine aktuellen Daten aus dem Umfeld des Fahrzeugs bereitgestellt werden. Ein typischer Störfall liegt beispielsweise dann vor, wenn Fahrbahnmarkierungen von dem Umfeldsensor nicht mehr erfasst werden können, weil sie von einem fremden Fahrzeug verdeckt sind. Die Erfindung geht dabei von der Erkenntnis aus, dass zuvor gespeicherte Daten des Umfeldsensors vorteilhaft für die Gewinnung von Schätzwerten als Ersatz für aktuell fehlende Umfelddaten eingesetzt werden können.

Um eine zu große Abweichung zwischen den Schätzwerten und aktuellen Messwerten zu vermeiden, wird dabei die Verwendung von Schätzwerten vorteilhaft zeitlich oder streckenmäßig begrenzt. Die zeitliche oder streckenmäßige Begrenzung kann dabei vorteilhaft von der Art der Fahrspur und/oder von der Qualität der von dem Umfeldsensor erfassten Daten abhängig gemacht werden. Vorteilhaft werden die Schätzwerte mit einem Plausibilitätsfaktor gewichtet, der mit zunehmender Zeit oder zunehmender Fahrstrecke abnimmt und der beispielsweise linear von der Zeit oder der Fahrstrecke abhängig ist. Um die Fehlerquote durch extreme Messwerte möglichst gering zu halten, werden die gespeicherten Daten für die Gewinnung von Schätzwerten vorteilhaft gefiltert.

Um einen möglichst ungestörten Übergang aus dem Schätzbereich zu ermöglichen, wird vorteilhaft bei Übergang in den Schätzbereich und bei Verlassen des Schätzbereichs für die Dauer eines vorgebbaren Zeitintervalls eine geglättete Anpassung zwischen den Schätzwerten und den Messwerten durchgeführt.

Erfindungsgemäß sind für die Steuerung des Fahrerassistenzsystems zwei Betriebsmodi (Teilmodus, Vollmodus) vorgesehen, wobei in dem Teilmodus die von dem Umfeldsensor erfassten Daten für Differenzwinkel, Krümmung und Krümmungsänderung weiterhin verwendet werden und nur der Versatz des Fahrzeugs geschätzt wird, und wobei in dem Vollmodus Krümmung und Krümmungsänderung auf plausible Werte zurückgeführt und Differenzwinkel sowie Versatz des Fahrzeugs anhand dieser Daten geschätzt werden. Eine Steuerung in dem Teilmodus wird dabei dann durchgeführt, wenn der Umfeldsensor keinen Markierungstyp für höchstens eine von zwei Fahrspurmarkierungen erfasst. Eine Steuerung in dem Vollmodus wird dann durchgeführt, wenn die von dem Umfeldsensor erfassten Werte der Krümmungsänderung nicht plausibel sind, wenn ein nicht plausibler Sprung in dem Wert des Differenzwinkels erfasst wird oder wenn kein Markierungstyp für beide Spurmarkierungen erfasst wird. Das erfindungsgemäße Fahrerassistenzsystem hat die Merkmale des Anspruchs 12. Weitere Vorteile ergeben sich aus den Unteransprüchen in Verbindung mit der nachfolgenden Beschreibung.

### Zeichnung

Ausführungsbeispiele der Erfindung werden nachfolgend unter Bezug auf die Zeichnung beschrieben. Dabei zeigt

Figur 1      eine Aufsicht auf einen Verkehrsraum mit einem eigenen und einem Fremdfahrzeug;

Figur 2      ein Diagramm mit Darstellung der Krümmung als Funktion der Zeit;

Figur 3      ein Diagramm mit Darstellung des Differenzwinkels als Funktion der Zeit;

Figur 4      ein Diagramm mit Darstellung des Versatzes als Funktion der Zeit;

Figur 5      die schematische Darstellung eines mit einem Fahrerassistenzsystem ausgerüsteten Fahrzeugs;

Figur 6      ein Diagramm mit Darstellung eines Plausibilitätsfaktors.

Beschreibung der Ausführungsbeispiele

Der in einem Fahrerassistenzsystem für die Erkennung der Fahrspur eingesetzte Umfeldsensor in Gestalt einer Videosensorik liefert eine modellmäßige Beschreibung der Fahrspur in Gestalt eines Polynoms

$$(1) \quad y(x) = c_0 + c_1 x + \frac{c_2}{2} x^2 + \frac{c_3}{6} x^3$$

Darin bedeuten:

$c_0$ Versatz zur Mitte der Fahrspur
$c_1$ Winkel zwischen der Tangente an die Fahrspur und der Längsachse des Fahrzeugs (Differenzwinkel)
$c_2$ Krümmung
$c_3$ Änderung der Krümmung.

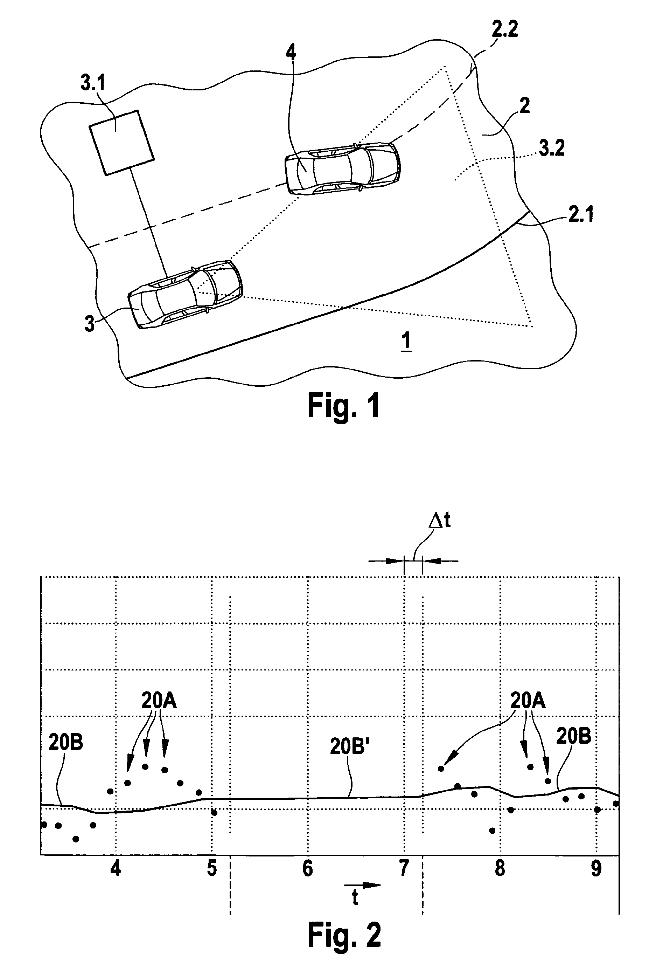

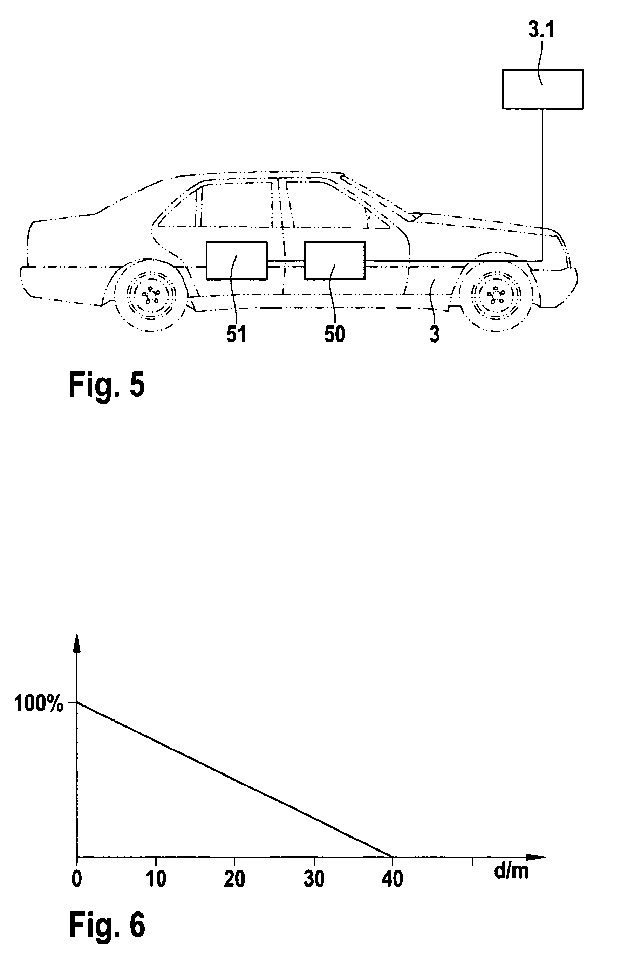

Weiterhin werden Qualitätsmaße für diese Größen und verschiedenartige Attribute für die Beschreibung der Eigenschaften der Fahrspur ermittelt. Ein typisches Attribut ist beispielsweise der Typ der verwendeten Markierung. In jedem Messzyklus des Fahrerassistenzsystems werden diese Daten erfasst und analysiert. Nacheinander auftretende unterschiedliche Zustände weisen auf einen Wegfall zuvor erfasster Markierungen oder auf eine falsche Fahrspur hin. Vorteilhaft werden zwei unterschiedliche Modi unterschieden, je nachdem, ob nur eine Markierung einer Fahrspur (Teilmodus) oder beide Markierungen (Vollmodus) betroffen sind. Ein Teilmodus wird angewandt, wenn beispielsweise kein Markierungstyp für eine Spurmarkierung vorhanden ist. Ein Vollmodus wird angewandt, wenn beispielsweise der Wert der Krümmungsänderung nicht plausibel ist, wenn ein nicht plausibler Sprung in dem Wert des Differenzwinkels vorliegt oder wenn für beide Spurmarkierungen kein Markierungstyp vorhanden ist. Bei Anwendung des Teilmodus werden von Umfeldsensoren gelieferte Daten für Differenzwinkel, Krümmung und Krümmungsänderung weiterhin verwendet. Lediglich der Versatz des Fahrzeugs wird geschätzt. Bei Anwendung des Vollmodus werden Krümmungen und Krümmungsänderung auf plausible werte zurückgeführt. Der Differenzwinkel und der Versatz des Fahrzeugs werden anhand dieser Daten geschätzt. Die Erfindung geht hierbei von der Erkenntnis aus, dass das Fahrerassistenzsystem auch dann noch eine automatische Spurführung ermöglichen kann, wenn die Umfeldsensoren zeitweilig keine charakteristischen Markierungen der Fahrspur mehr erfassen, weil diese entweder fehlen oder durch andere Verkehrsteilnehmer verdeckt sind. Die erfinderische Lösung nutzt hierbei in einer Speichereinrichtung gespeicherte Daten der Sensoren, die das Fahrerassistenzsystem vor dem Erreichen des gestörten Verkehrsraums erfasst und gespeichert hat. Als gestörter Verkehrsraum wird der Fahrbahnabschnitt bezeichnet, in dem die genannten Markierungen fehlen oder verdeckt und damit für die Sensoren des Fahrerassistenzsystems nicht mehr erfassbar sind. Aufgrund der gespeicherten Daten kann dann ein plausibler Verlauf der Fahrspur geschätzt werden, der der automatischen Spurführung zugrunde liegt. Die in einem solchen Störfall maximal überbrückbare Wegstrecke ist abhängig von dem angewandten Modus (Teilmodus, Vollmodus) und von den Daten der Sensoren, die vor dem Auftreten des Störfalls erfasst und gespeichert worden sind. In vorteilhaften Ausführungsvarianten kann die maximal überbrückbare Wegstrecke von der Art des Verkehrsraums und/oder von der Beschaffenheit der Fahrbahnmarkierungen abhängig gemacht werden. Hat beispielsweise das Fahrzeug vor dem Eintreten des Störfalls eine im Wesentlichen ohne Krümmungen verlaufende Landstraße mit gut sichtbaren Fahrbahnmarkierungen befahren, dann kann unterstellt werden, dass der zuvor erfasste und gespeicherte Verlauf der Fahrspur sich in den nächsten Sekunden im Wesentlichen nicht ändern wird. Mit einer auf den gespeicherten Daten beruhenden Schätzung der Fahrspur kann somit noch eine längere Fahrstrecke überbrückt erden. Befährt das Fahrzeug dagegen eine kurvige Straße im Stadtbereich mit stark abgenutzten Fahrbahnmarkierungen, dann ist von einer geringen Qualität der gespeicherten Daten auszugehen. Vorsorglich kann daher unter Rückgriff auf die gespeicherten Daten im Störfall nur eine vergleichsweise kurze Strecke überbrückt werden. Vorteilhaft wird auf Basis der gespeicherten Daten ein Plausibilitätsfaktor generiert, der bis zu dem Erreichen der maximalen Wegstrecke auf Null absinkt. In einer einfachen Ausführungsvariante erfolgt dabei das Absenken nach einer linearen Funktion. In weiteren Ausführungsvarianten kann für die Absenkung ein anderer funktionaler Zusammenhang gewählt werden, der auch noch von der Qualität der gespeicherten Daten abhängig gemacht werden kann. Da in der Praxis die von den Sensoren des Fahrerassistenzsystems vor Eintreten des Störfalls erfassten Daten häufig schon fehlerbehaftet sind, werden für die Spurführung im Störfall vorzugsweise gefilterte Werte der Daten eingesetzt, um stark abweichende Werte zu eliminieren. Nach Beendigung des Störfalls erfolgt eine Spurführung aufgrund aktuell erfasster Daten der Sensoren des Fahrerassistenzsystems. Da diese aktuellen Daten sich stark von den in dem Störfall verwendeten Schätzwerten unterscheiden können, erfolgt vorteilhaft keine abrupte Übernahme der aktuellen Messwerte der Sensoren, sondern eine geglättete Anpassung innerhalb weniger Berechnungstakte. Im Folgenden wird ein Ausführungsbeispiel der Erfindung weiter unter Bezug auf die Zeichnung beschrieben. Dabei zeigt Figur 1 eine Aufsicht auf einen Verkehrsraum 1 mit einer Fahrspur 2, die von Fahrspurmarkierungen 2.1 und 2.2 begrenzt ist. In dem Verkehrsraum 1 befinden sich zwei Fahrzeuge 3 und 4. Das Fahrzeug 3 ist das mit einem Fahrerassistenzsystem ausgerüstete Egofahrzeug. Das Fahrerassistenzsystem umfasst mindestens einen Videosensor 3.1, dessen Erfassungsbereich mit Bezugsziffer 3.2 bezeichnet ist. Das sich vor dem Egofahrzeug 3 in dem Erfassungsbereich 3.1 des Videosensors bewegende Fremdfahrzeug 4 verdeckt gerade die Fahrspurmarkierung 2.2, so dass diese von dem Videosensor 3.1 des Egofahrzeugs 3 nicht erfassbar ist. Möglicherweise hat das Fremdfahrzeug 4 gerade einen Überholvorgang beendet und biegt wieder auf die von dem Egofahrzeug 3 befahrene Fahrspur 2 ab, um sich dort vor dieses zu setzen. Ohne die erfinderische Lösung würde zumindest die Spurführungsfunktion des Fahrerassistenzsystems des Egofahrzeugs 3 deaktiviert, da der Verlauf der Fahrspurmarkierung 2.2 von dem Videosensor 3.1 (Figur 1, Figur 5) des Egofahrzeugs 3 nicht mehr erfassbar ist. Das Fahrerassistenzsystem des Fahrzeugs 3 umfasst neben dem mindestens einen Videosensor 3.1 ein Steuergerät 50 (Figur 5) für die Auswertung der Daten des Videosensors 3.1, sowie eine Speichereinrichtung 51 für die Speicherung von Rohdaten des Videosensors 3.1 und/oder aus diesen Rohdaten aufbereiteten Daten. Bei Eintreten einer wie in Figur 1 dargestellten Verkehrssituation kann nun, unter Anwendung der erfinderischen Lösung, das Fahrerassistenzsystem des Fahrzeugs 3, zumindest eine zeitlang, im Wesentlichen störungsfrei weiterarbeiten und somit eine Querführung des Fahrzeugs 3 ermöglichen. Die Erfindung geht dabei von der Erkenntnis aus, dass durch Speicherung der bei einer ungestörten Verkehrssituation gewonnenen Sensordaten des Videosensors 3.1 in der Speichereinrichtung 51, diese Daten dem Fahrerassistenzsystem bei Auftreten einer Störung als Erfahrungswerte zur Verfügung stehen, mit deren Hilfe beispielsweise ein Verlauf einer Fahrspur 2 prognostiziert werden kann. Bei Auftreten einer Störung schätzt also das Fahrerassistenzsystem den zukünftigen Verlauf der Fahrspur 2 auf Basis der in der Speichereinrichtung 51 gespeicherten Daten. Dies wird im Folgenden noch ausführlicher unter Bezug auf die in den Figuren 2, 3 und 4 dargestellten Diagramme erläutert. Dabei zeigt Figur 2 ein Diagramm mit Darstellung der Krümmung der Fahrspur 2 als Funktion der Zeit, wobei hier mit Zeit die während der Fahrt des Fahrzeugs 3 auf der Fahrspur 2 zurückgelegte Zeit gemeint ist. Auf der x-Achse des Diagramms ist die Zeit in Sekunden aufgetragen. Auf der y-Achse des Diagramms ist die Krümmung der Fahrspur 2 aufgetragen. Dabei sind mit Bezugsziffer 20A von dem Videosensor 3.1 aus seinem Erfassungsbereich 3.2 gewonnene Messwerte bezeichnet. Mit Bezugsziffer 20B ist eine aus diesen Messwerten 20A durch Filterung gewonnene Kurve bezeichnet, die beispielsweise eine möglichst gute Approximation an diese Messwerte darstellt. Wie aus dem Diagramm in Figur 2 hervorgeht, werden etwa bis zum Zeitpunkt 5 Sekunden von dem Videosensor 3.1 Messwerte 20A bereitgestellt, da er in seinem Erfassungsbereich 3.2 die für ihn gut sichtbaren Fahrspurmarkierungen 2.1 und 2.2 erfasst. Wie bereits erwähnt, werden diese Daten in der Speichereinrichtung 51 gespeichert. Etwa in dem Zeitintervall 5-7 Sekunden sind, wie in Figur 1 dargestellt, die Fahrspurmarkierungen 2.2 durch ein Fremdfahrzeug 4 derart verdeckt, dass sie von dem Videosensor 3.1 des Egofahrzeugs 3 nicht mehr erfasst werden können. Anstelle, wie bei herkömmlichen Systemen, wenigstens Funktionen teilweise zu deaktivieren, beispielsweise die Querführung des Fahrzeugs 3, greift das erfindungsgemäß ausgebildete Fahrerassistenzsystem nun aber auf zeitlich früher gewonnene Daten zurück, die in der Speichereinrichtung 51 gespeichert sind. Ein Rückgriff kann beispielsweise auf die in dem Zeitintervall 3 bis 5 Sekunden gewonnenen Daten erfolgen. Aus diesen gespeicherten Daten wird eine die Krümmung repräsentierende Kurve 20B' abgeleitet. Vorzugsweise wird der Verlauf dieser Kurve 20B' aus gefilterten Daten aus der Speichereinrichtung 51 abgeleitet, um die Verwendung fehlerhafter Daten bei der Schätzung des künftigen Verlaufs nach Möglichkeit auszuschließen. Diese auf Basis der gespeicherten Daten geschätzten Daten dienen dann dem Fahrerassistenzsystem des Egofahrzeugs 3 für die Steuerung diverser Funktionen, beispielsweise für die Querführung des Egofahrzeugs 3. Nach etwa 7 Sekunden, also nach etwa 2 Sekunden Fahrzeit, in der das Egofahrzeug 3 etwa eine Fahrstrecke von 40m zurückgelegt hat, wird die Fahrspurmarkierung 2.2 nicht mehr von dem Fahrzeug 4 verdeckt. Die Fahrbahnmarkierung 2.2 kann somit wieder von dem Videosensor 3.1 des Egofahrzeugs 3 erfasst werden. Nach etwa 7 Sekunden kann der Videosensor 3.1 daher wieder Messwerte 20A für das Fahrerassistenzsystem bereitstellen, die zu einer gefilterten Kurve 20B verarbeitet werden. Da sich die geschätzten Werte sehr stark von den tatsächlichen Messwerten unterscheiden können, erfolgt jeweils eine geglättete Anpassung innerhalb weniger Berechnungstakte der taktweise durchgeführten Berechnung, also beispielsweise in dem Zeitintervall Δt. Vorteilhaft wird, wie in Figur 6 dargestellt, ein Maß für die Plausibilität vorgegeben, das zum Zeitpunkt der Übernahme der Schätzwerte 100% beträgt und das in Abhängigkeit von der gefahrenen Wegstrecke d absinkt. Beispielsweise erreicht die Plausibilität, wie in Figur 6 dargestellt, nach einer Wegstrecke von 40m den Wert Null. Wie eingangs bereits erwähnt, kann die maximale Länge der Wegstrecke d zweckmäßig von der Art der Fahrbahn und/oder der Qualität der zur Verfügung stehenden Daten abhängig gemacht werden. So kann beispielsweise bei einem im Wesentlichen krümmungsfreien Verlauf der Fahrspur 2 in einem Störungsfall eine längere Wegstrecke d für die Nutzung gespeicherter Daten zugelassen werden.

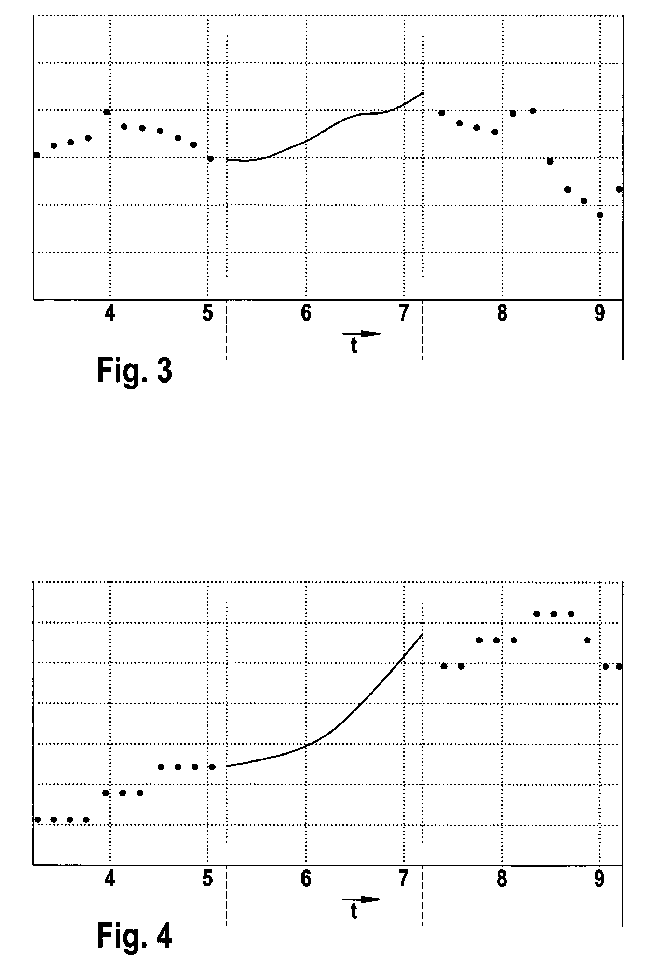

In dem in Figur 3 dargestellten Diagramm ist der Differenzwinkel (Winkel c1 zwischen der Fahrspurtangente und der Längsachse des Fahrzeugs 3) als Funktion der Fahrzeit dargestellt. Analog zu der Beschreibung des Diagramms in Figur 2, liegen auch hier wieder bis etwa zu dem Zeitpunkt 5 Sekunden und ab dem Zeitpunkt 7 Sekunden Messwerte vor, während in dem dazwischen liegenden Zeitintervall eine Berechnung aufgrund der zuvor bekannten Daten und unter Berücksichtigung der Bewegung des Eigenfahrzeugs erfolgt.

In dem In Figur 4 gezeigten Diagramm ist der Versatz des Fahrzeugs 3 als Funktion der Zeit dargestellt. In Analogie zu den schon in Figur 2 und 3 dargestellten Diagrammen erfolgt auch hier wieder in dem Zeitintervall zwischen etwa 5 Sekunden und etwa 7 Sekunden eine Berechnung aufgrund der zuvor bekannten Daten und unter Berücksichtigung der Bewegung des Eigenfahrzeugs.

**Patentansprüche**

1.  Verfahren für die Steuerung eines Fahrerassistenzsystems eines Fahrzeugs (3) mit mindestens einem Umfeldsensor (3.1) für die Erfassung von Umfelddaten, zur Anwendung für die Fahrspurerkennung wobei die von dem Umfeldsensor (3.1) erfassten Daten gespeichert werden und bei Auftreten einer Störung bei der Erfassung der Umfelddaten auf die gespeicherten Daten zurückgegriffen wird, um aus diesen Schätzwerte für aktuell fehlende Umfelddaten abzuleiten, **dadurch gekennzeichnet, dass** für die Steuerung des Fahrerassistenzsystems zwei Betriebsmodi, nämlich Teilmodus und Vollmodus vorgesehen sind, wobei in dem Teilmodus die von dem Umfeldsensor erfassten Daten für Differenzwinkel, Krümmung und Krümmungsänderung weiterhin verwendet werden und nur der Versatz des Fahrzeugs geschätzt wird, und wobei in dem Vollmodus Krümmung und Krümmungsänderung auf plausible Werte zurückgeführt und Differenzwinkel sowie Versatz des Fahrzeugs anhand dieser Daten geschätzt werden.

2.  Verfahren nach Anspruch 1, **dadurch gekennzeichnet, dass** die Verwendung von Schätzwerten zeitlich oder streckenmäßig begrenzt wird.

3.  Verfahren nach Anspruch 2, **dadurch gekennzeichnet, dass** die zeitliche oder streckenmäßige Begrenzung von der Art der Fahrspur (2) und/oder von der Qualität der von dem Umfeldsensor (3.1) erfassten Daten abhängig gemacht wird.

4.  Verfahren nach einem der vorhergehenden Ansprüche, **dadurch gekennzeichnet, dass** die Schätzwerte mit einem Plausibilitätsfaktor gewichtet werden, der mit zunehmender Zeit oder zunehmender Fahrstrecke abnimmt.

5.  Verfahren nach Anspruch 4, **dadurch gekennzeichnet, dass** der Plausibilitätsfaktor linear von der Zeit oder der Fahrstrecke abhängig ist.

6.  Verfahren nach einem der vorhergehenden Ansprüche, **dadurch gekennzeichnet, dass** die gespeicherten Daten für die Gewinnung von Schätzwerten gefiltert werden.

7.  Verfahren nach einem der vorhergehenden Ansprüche, **dadurch gekennzeichnet, dass** bei Verlassen des Schätzbereichs für die Dauer eines Zeitintervalls (Δt) eine geglättete Anpassung zwischen den Schätzwerten und den Messwerten erfolgt.

8.  Verfahren nach einem der vorhergehenden Ansprüche; **dadurch gekennzeichnet, dass** eine Steuerung in dem Teilmodus dann durchgeführt wird, wenn der Umfeldsensor (3.1) keinen Markierungstyp für höchstens eine der Fahrspurmarkierungen (2.1, 2.2) erfasst.

9.  Verfahren nach einem der vorhergehenden Ansprüche, **dadurch gekennzeichnet, dass** eine Steuerung in dem Vollmodus dann durchgeführt wird, wenn die von dem Umfeldsensor (3.1) erfassten Werte der Krümmungsänderung nicht plausibel sind.

10. Verfahren nach einem der vorhergehenden Ansprüche, **dadurch gekennzeichnet, dass** eine Steuerung in dem Vollmodus dann durchgeführt wird, wenn ein nicht plausibler Sprung in dem Wert des Differenzwinkels erfasst wird.

11. Verfahren nach einem der vorhergehenden Ansprüche, **dadurch gekennzeichnet, dass** eine Steuerung in dem Vollmodus dann durchgeführt wird, wenn kein Markierungstyp für beide Spurmarkierungen erfasst wird.

12. Fahrerassistenzsystem mit mindestens einem Umfeldsensor, mit einer Speichereinrichtung (51) für die wenigstens zeitweilige Speicherung von durch den Umfeldsensor (3.1) erfassten oder aus diesen erfassten Daten abgeleiteten Daten, zur Anwendung für die Fahrspurerkennung
und einer Steuereinheit, die
bei Auftreten einer Störung bei der Erfassung der
Umfelddaten auf die gespeicherten Daten zurückgreift, um aus diesen Schätzwerte für aktuell fehlende Umfelddaten abzuleiten,
**dadurch gekennzeichnet, dass**
für die Steuereinheit des Fahrerassistenzsystems
zwei Betriebsmodi, nämlich Teilmodus und Vollmodus vorgesehen sind; wobei in dem Teilmodus die
von dem Umfeldsensor erfassten Daten für Differenzwinkel, Krümmung und Krümmungsänderung
weiterhin verwendet werden und nur der Versatz des
Fahrzeugs geschätzt wird, und wobei in dem Vollmodus Krümmung und Krümmungsänderung auf
plausible Werte zurückgeführt und Differenzwinkel
sowie Versatz des Fahrzeugs anhand dieser Daten
geschätzt werden.

**Claims**

1. Control method for a driver assistance system of a
vehicle (3) having at least one surroundings sensor
(3.1) for acquiring surroundings data for use in detecting lanes, wherein the data acquired by the surrounding sensor (3.1) are stored and when a fault
occurs during the acquisition of the surroundings data the stored data are resorted to in order to derive
estimated values for currently missing surroundings
data from said stored data, **characterized in that**
two operating modes, specifically the partial mode
and full mode, are provided for controlling the driver
assistance system, wherein in the partial mode the
data acquired by the surroundings sensor continue
to be used for the differential angle, curvature and
change in curvature, and only the offset of the vehicle
is estimated, and wherein in the full mode the curvature and change in curvature are returned to plausible values and the differential angle and offset of
the vehicle are estimated on the basis of these data.

2. Method according to Claim 1, **characterized in that**
the use of estimated values is limited chronologically
or in terms of distance travelled.

3. Method according to Claim 2, **characterized in that**
the chronological limitation or limitation in terms of
distance travelled is made dependent on the type of
lane (2) and/or on the quality of the data acquired by
the surroundings sensor (3.1).

4. Method according to one of the preceding claims,
**characterized in that** the estimated values are
weighted with a plausibility factor which reduces as
the time increases or the distance travelled increases.

5. Method according to Claim 4, **characterized in that**
the plausibility factor is linearly dependent on the
time or the distance travelled.

6. Method according to one of the preceding claims,
**characterized in that** the stored data are filtered for
the acquisition of estimated values.

7. Method according to one of the preceding claims,
**characterized in that**, when the estimated range
for the duration of a time interval ($\Delta t$) is exited, a
smoothed adaptation is carried out between the estimated values and the measured values.

8. Method according to one of the preceding claims,
**characterized in that** a control process is carried
out in the partial mode when the surroundings sensor
(3.1) does not sense a type of marking for at most
one of the lane markings (2.1, 2.2).

9. Method according to one of the preceding claims,
**characterized in that** a control process is carried
out in the full mode when the values acquired for the
change in curvature by the surroundings sensor (3.1)
are not plausible.

10. Method according to one of the preceding claims,
**characterized in that** a control process is carried
out in the full mode if an implausible sudden change
is sensed in the value of the differential angle.

11. Method according to one of the preceding claims,
**characterized in that** a control process is carried
out in the full mode when no type of marking is
sensed for the two lane markings.

12. Driver assistance system having at least one surrounding sensor, having a storage device (51) for
the at least temporary storage of data which have
been acquired by the surroundings sensor (3.1) or
data which have been derived from said acquired
data, for use in detecting a lane,
and a control unit which, when a fault occurs in the
acquisition of the surroundings data, resorts to the
stored data in order to derive estimated values for
currently missing surroundings data from said stored
data,
**characterized in that**
two operating modes, specifically the partial mode
and full mode, are provided for the control unit of the
driver assistance system, wherein in the partial mode
the data acquired by the surroundings sensor continue to be used for the differential angle, curvature
and change in curvature, and only the offset of the
vehicle is estimated, and wherein in the full mode
the curvature and change in curvature are returned
to plausible values and the differential angle and offset of the vehicle are estimated on the basis of these data.

## Revendications

**1.** Procédé de commande d'un système d'assistance au conducteur d'un véhicule (3) qui présente au moins une sonde d'environnement (3.1) qui saisit des données de l'environnement, et destiné à reconnaître la bande de circulation occupée par le véhicule,
dans lequel
les données saisies par la sonde d'environnement (3.1) sont conservées en mémoire et en cas d'apparition d'une perturbation dans la saisie des données de l'environnement, on retourne aux données conservées en mémoire pour en déduire des valeurs estimées des données d'environnement absentes à ce moment,
**caractérisé en ce que**
pour la commande du système d'assistance au conducteur, le procédé présente deux modes de fonctionnement, à savoir un mode partiel et un mode complet,
**en ce qu'**en mode partiel, il utilise les données saisies par le détecteur d'environnement, à savoir les données d'angle différentiel, de courbure et de variation de la courbure et seul le décalage du véhicule est estimé et
**en ce qu'**en mode complet, il utilise des valeurs plausibles de la courbure et de la modification de courbure, l'angle différentiel ainsi que le décalage du véhicule étant estimés à l'aide de ces données.

**2.** Procédé selon la revendication 1, **caractérisé en ce que** l'utilisation de valeurs estimées est limitée temporellement ou sur une certaine distance.

**3.** Procédé selon la revendication 2, **caractérisé en ce que** la limitation temporelle ou en fonction de la distance sont rendues dépendantes du type de bande de circulation (2) et/ou de la qualité des données saisies par le détecteur d'environnement (3.1).

**4.** Procédé selon l'une des revendications précédentes, **caractérisé en ce que** les valeurs estimées sont pondérées à l'aide d'un facteur de plausibilité qui diminue avec une augmentation du temps ou une augmentation de la distance parcourue.

**5.** Procédé selon la revendication 4, **caractérisé en ce que** le facteur de plausibilité dépend linéairement du temps ou de la distance parcourue.

**6.** Procédé selon l'une des revendications précédentes, **caractérisé en ce que** les données conservées en mémoire sont filtrées en vue d'obtenir des valeurs estimées.

**7.** Procédé selon l'une des revendications précédentes, **caractérisé en ce que** si l'on sort de la plage d'estimation pendant la durée d'un intervalle de temps ($\Delta t$), une adaptation lissée a lieu entre les valeurs estimées et les valeurs de mesure.

**8.** Procédé selon l'une des revendications précédentes, **caractérisé en ce qu'**une commande en mode partiel est exécutée si la sonde d'environnement (3.1) ne saisit aucun type de marquage au sol pendant au plus un des marquages de bande de circulation (2.1, 2.2).

**9.** Procédé selon l'une des revendications précédentes, **caractérisé en ce qu'**une commande en mode complet est exécutée si les valeurs de modification de courbure saisies par la sonde d'environnement (3.1) ne sont pas plausibles.

**10.** Procédé selon l'une des revendications précédentes, **caractérisé en ce qu'**une commande en mode complet est exécutée si un saut non plausible est détecté dans la valeur de l'angle différentiel.

**11.** Procédé selon l'une des revendications précédentes, **caractérisé en ce qu'**une commande en mode complet est exécutée si aucun type de marquage n'est détecté pour les deux marquages de bande de circulation.

**12.** Système d'assistance au conducteur présentant au moins une sonde d'environnement ainsi qu'un dispositif de mémoire (51) qui conserve au moins temporairement en mémoire des données saisies par le détecteur d'environnement (3.1) ou des données déduites de ces données saisies, le système étant destiné à être utilisé en détection de la bande de circulation, et
une unité de commande qui, en cas de détection d'une perturbation dans la saisie des données d'environnement, retourne aux données conservés en mémoire pour, à partir de ces données estimées, déduire les données d'environnement absentes à ce moment, **caractérisé en ce que**
pour l'unité de commande du système d'assistance au conducteur, le système présente deux modes de fonctionnement, à savoir un mode partiel et un mode complet,
**en ce qu'**en mode partiel, il utilise les données saisies par le détecteur d'environnement, à savoir les données d'angle différentiel, de courbure et de variation de la courbure, seul le décalage du véhicule étant estimé et
**en ce qu'**en mode complet, il utilise des valeurs plausibles de la courbure et de la modification de courbure, l'angle différentiel ainsi que le décalage du véhicule étant estimés à l'aide de ces données.

**Fig. 1**

**Fig. 2**

**Fig. 3**

**Fig. 4**

3.1

**Fig. 5**

51    50    3

**Fig. 6**

100%

0    10    20    30    40    d/m

**EP 1 803 622 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005039957 A1
- US 20040183663 A1